# EUROPEAN PATENT SPECIFICATION

(11) **EP 3 564 086 B1**
(45) Date of publication and mention of the grant of the patent: **07.12.2022**
(21) Application number: 19171992.1
(22) Date of filing: 30.04.2019
(51) Int. Cl.: B60W 60/00, G05D 1/00

(54) **MANAGING DRIVE MODES OF A VEHICLE**
VERWALTUNG DER FAHRMODI EINES FAHRZEUGS
GESTION DES MODES D'ENTRAÎNEMENT D'UN VÉHICULE

(30) Priority: 01.05.2018 IN 201811016407
(43) Date of publication of application: 06.11.2019
(73) Proprietor: The Hi-Tech Robotic Systemz Ltd, 122001 Gurugram (IN)
(72) Inventor: ANUJ, KAPURIA, 122001 Gurugram (IN); RITUKAR, VIJAY, 122001 Gurugram (IN)
(74) Representative: Isern Patentes y Marcas S.L.

(56) References cited:
- EP-A1- 3 279 053
- US-A1- 2017 038 773
- US-A1- 2017 088 145
- US-A1- 2018 022 350

## Description

### TECHNICAL FIELD

The present invention relates generally to managing driving modes of a vehicle and particularly to switching driving modes, based on driving profile of a driver, and an autonomous driving profile of the vehicle, providing autonomous control according to current surrounding environment.

### BACKGROUND

Autonomous vehicles are believed to be next generation vehicles. Autonomous vehicles are now being provided with increased amount of computing and sensing abilities. For achieving increased sensing the vehicles are being provided with multiple types of monitoring systems, such as cameras, or video recorders to monitor surrounding environment of vehicles that provide a driver of a vehicle with useful data regarding the surrounding environment for improved driving. Such monitoring systems may be installed, for instance, on a roof of the vehicle or on the front portion, back portion of the vehicle to have a broad view of the surrounding environment and capture data associated with objects, pedestrians or vehicles within the surrounding environment. In addition, the monitoring systems may also monitor the driver of the vehicle for facial pose and gaze. The collected data is then subjected to processing to derive meaningful information that may be used in assisting the driver for navigation, changing lanes, and averting a potential collision. An event, such as an approaching vehicle, a pedestrian on the road may be detected and a warning may be issued to the driver to help the driver initiate a precautionary action.

Such monitoring systems may also be utilized to derive driving profiles of drivers. This may be achieved by classifying the events faced by the drivers during driving and monitoring and storing the action taken by the drivers. Also, the monitoring systems may be configured to continuously store various other information to aid driving profile generation. For example, how a driver behaves in traffic condition, what kind of impact driver's maneuvers have on the vehicle while combatting various situations, etc. Thus, such information helps in creating an overall profile of the driver for controlling of vehicle. Such information may be utilized by vehicle systems for other taking varied decisions.

To increase autonomy of the vehicles, various techniques are being utilized. In such techniques, mostly the handoff switching is based on traffic levels, terrain conditions etc. For e.g. in places wherein the vehicle senses more traffic, handoff is performed to switch from autonomous mode to manual mode. However, the existing techniques are not efficient as they are based on predetermined threshold data and pre-fed conditions.

US 2017/038773 A1 discloses a computer-implemented method and system for controlling a driving mode of a self-driving vehicle (SDV). It compares the determined control processor competence level to the human driver competence level, and selectively assign control of the SDV to the on-board SDV control processor or the human driver based on which of the control processor competence level and the human driver competence level is relatively higher to one another.

US 2018/022350 A1 provides an adaptive vehicle control system that compare the autonomous operation profile of at least one of the one or more neighboring vehicles with the autonomous operation profile of the target vehicle and utilizes the said comparison of target vehicle and neighboring vehicles to alter a condition of the target vehicle such that the autonomous operation profile of the target vehicle matches an autonomous operation profile of an individual neighboring vehicle of the one or more neighboring vehicles positioned in the same lane as the target vehicle.

Therefore, there exists a need for more efficient techniques for managing drive modes of the vehicle.

### SUMMARY

This need is addressed by a method according to claim 1 and by a system according to claim 7.

In an example implementation, the method includes steps of detecting driver of the vehicle based on at least one attribute of the driver. Further, the method includes capturing surrounding environment conditions by using a plurality of data capturing modules.

Thereafter, the autonomous profile and driver's profile driving the vehicle is fetched based on the surrounding environment conditions. The autonomous profile is indicative of driving performance of the vehicle under autonomous mode and the driver profile is indicative of driving pattern of the driver. The autonomous profile and the driver profile may be stored within a central server. Furthermore, the method includes comparison of the autonomous profile with the driver profile based on the surrounding environment conditions. Further, it is determined whether to switch the vehicle control to an autonomous mode of driving. Thereafter a handoff of the vehicle drive to autonomous mode is performed.

The system may be carried out by an integrated system comprising the modules. The system may also be applicable to provide alerts to a driver of the vehicle by the modules placed at different areas within an autonomous vehicle, wherein the modules are communicatively coupled to each other.

Thus, the present invention provides efficient techniques for vehicle control handoff. The techniques provide changing the vehicle control from autonomous to manual mode or vice-versa, based on the surrounding environment conditions.

The plurality of data capturing modules may be one or a combination of cameras, radio detection and ranging (RADARs), light detection and ranging (LiDARs), or ultrasonic sensors. The method may further comprise collecting data from neighboring vehicles about continuation of current surrounding environment.

The method may further comprise collating Global Positioning System (GPS) data with data collected from neighboring vehicles about current surrounding environment.

The method may further comprise collecting driving mode of neighboring vehicles.

The driving mode may be manual or autonomous mode.

The method may comprise collecting correction profile for each of the neighboring vehicles upto a threshold distance.

The method may comprise gathering vehicle data.

The handoff control system may further be connected to a central server.

The central server may be connected to a plurality of similar handoff control systems.

The central server may store data from all the systems for further usage about handoff decision.

The system may further include a warning module to provide warnings to the driver.

The warning module may be Light Emitting Diode (LED) module, a Liquid Crystal Display (LCD), or a speaker.

The hand off decision may be determined real time.

The processor may be connected to an Electronic Control Unit (ECU) to gather vehicle data.

Other and further aspects of the invention will be evident from reading the following detailed description of the embodiments, which are intended to illustrate, not limit, the present invention.

### BRIEF DESCRIPTION OF THE DRAWINGS

The illustrated embodiments of the invention will be best understood by reference to the drawings, wherein like parts are designated by like numerals throughout. The following description is intended only by way of example, and simply illustrates certain selected embodiments of devices, systems, and processes that are consistent with the subject matter as claimed herein.
**FIG. 1** illustrates an example environment having a vehicle configured with a handoff control system in accordance with an aspect of the present invention;
**FIG. 2A** illustrates a plurality of handoff control systems connected to each other, in accordance with an aspect of the present invention;
**FIG. 2B** illustrates a plurality of handoff control systems connected to each other, in accordance with another aspect of the present invention;
**FIG. 3** illustrates various modules of a handoff control system, in accordance with an aspect of the present invention;
**FIG. 4** illustrates various modules of a data capturing module, in accordance with an aspect of the present invention;
**FIG. 5** illustrates a method for performing handoff for a vehicle, in accordance with an aspect of the present invention;
**FIG. 6** illustrates a method for performing handoff for a vehicle, in accordance with another aspect of the present invention;
**FIG. 7** illustrates an exemplary computer system, in accordance with an aspect of the embodiments;

### DETAILED DESCRIPTION

Autonomous mode of vehicles is utilized for automatic riving of the vehicle. This is a mode that is usually initiated by a driver itself. However, this is not preferred since there are various other factors as well that may be checked before initiating autonomous driving mode. At times, the conditions may not be favourable for the autonomous mode and hence may not be a useful technique.

Also, while in autonomous mode the driver of the vehicle tends to become in attentive and pays not much attention on the road events. Since, there can be certain events that the autonomous mode may not be able to take care of, such inactiveness of the driver may be a cause for a potential mishap or accident.

A few inventive aspects of the disclosed embodiments are explained in detail below with reference to the various figures. Embodiments are described to illustrate the disclosed invention, not to limit its scope, which is defined by the claims. Those of ordinary skill in the art will recognize a number of equivalent variations of the various features provided in the description that follows.

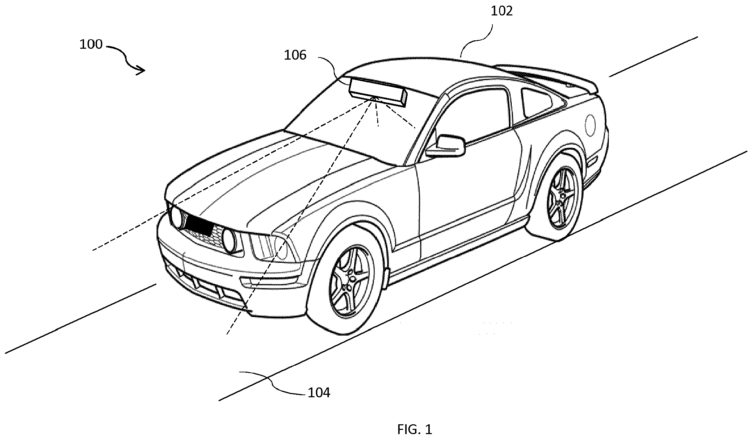

Referring now to FIG. 1, an example environment 100 in which various embodiments may function is illustrated. As shown the environment 100 includes a vehicle 102 moving or being driven on a road 104. The vehicle 102 may be a car, a jeep, a truck, a bus, or a three-wheeler vehicle. The vehicle 102 may have parts like steering wheel, tires, brake, engine, carburetor, doors, horn, lights, etc. not shown in the figure. Also, the vehicle 102 may be provided with physical actuators connected to critical function parts like brakes, engine control unit, steering wheel, horn and lights.

The vehicle 102 further includes a handoff control system (HCS) 106 positioned such that the HCS 106 may monitor the external environment. In one example, the HCS 106 may be positioned close to the rear view mirror of the vehicle 102. It would be noted that, although the HCS 106 is shown positioned near the rear view mirror, the HCS 106 may be positioned at other places with in the vehicle 102. For instance, the HCS 106 may be positioned on one of a windshield behind an internal rear view mirror, an "A" pillar of the vehicle 102, and on a dashboard.

The HCS 106 may be configured to collect external data, such as data associated with roads, pedestrians, objects, road edges, lane marking, potential collision, speed signs, potholes, vehicles, location of the vehicle, and a driving pattern of the driver on the road. Additionally, the HCS 106 may be operatively connected to an Electronic Control Unit (ECU) of the vehicle 102 to gather state of its various parts necessary for optimum functioning. Further, the HCS 106 may also capture data related to driver state, such as facial features, retinal scan, blink rate of eyes, eyeball movement, opening of the eye, and head movement of the driver.

In one example, the HCS 106 may be connected to an external server (not shown in figure) through a wireless network, such as a datacenter for cloud backup and data archiving purpose. For instance, information associated with occurrence of an event and preventive action taken by the driver may be recorded for a predefined time span of 1 minute, 30 seconds, or 5 seconds and relayed to the datacenter. Such information may be stored within the datacenter and may be used for analyzing driver pattern during the events and providing useful information to other drivers in similar situations. Also, the information may be utilized for validating insurance claims or insurance premium calculations. The information stored within the datacenter may be previous 6 months data or a complete year's data.

In one example, the HCS 106 may be connected to the actuators to take over control of vehicle 102.

The details of the components or modules of the HCS 106 and functionality of the modules have been further explained with reference to description of the forthcoming figures.

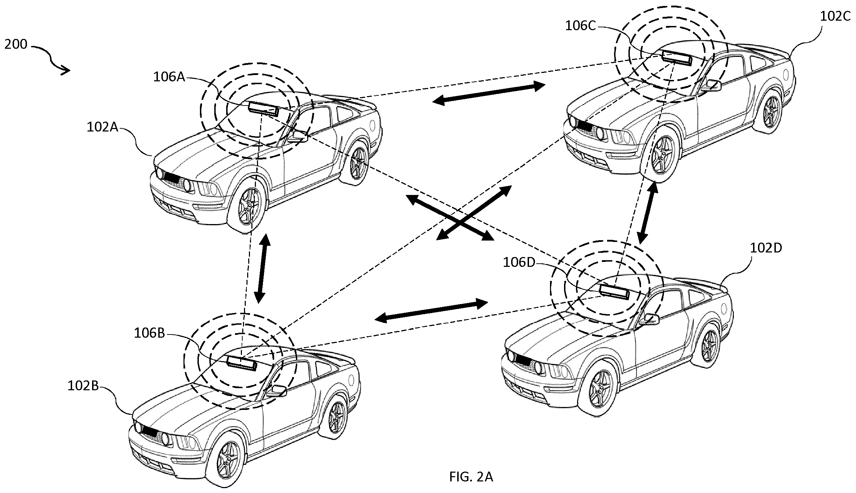

FIG. 2A illustrates an environment 200 wherein multiple HCS' 106A-106D connected to each other, in accordance with an implementation of the present subject matter corresponding to vehicles 102A-102D. The multiple HCS' 106A-106D may share and store various information amongst each other. The communication of information may be through various short range wireless communication protocols like ZigBee, etc. or mobile communication protocols. Each of the connected HCS' 106A-106D may be able to access information of other systems when required based on a prior approval or real time permission-based requests.

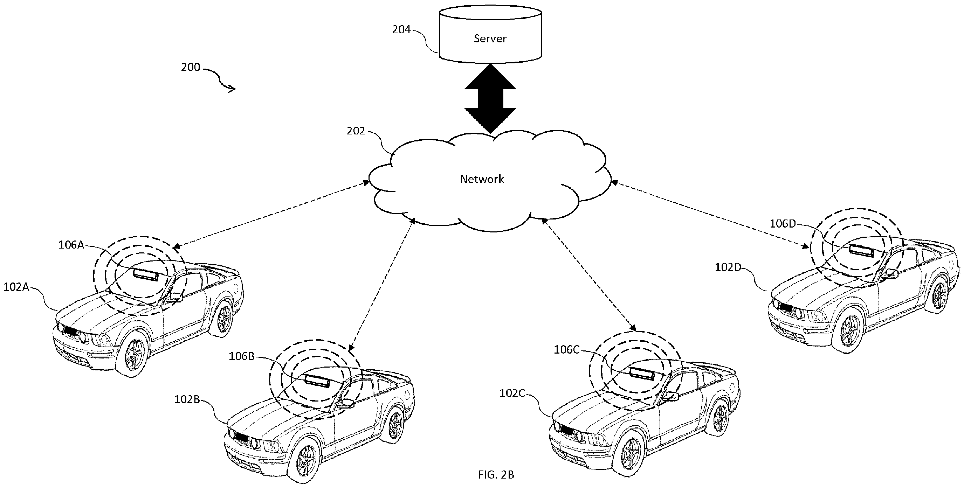

FIG. 2B illustrates an environment 200 wherein multiple HCS' 106A-106D connected to a central server 204, in accordance with another implementation of the present subject matter. The multiple HCS' 106A-106D may share and store various information with the central server 204. The communication of information may be through a network 202 that may be any one of a satellite communication, or mobile communication protocols. Each of the connected HCS' 106A-106D may also access information of other systems when required.

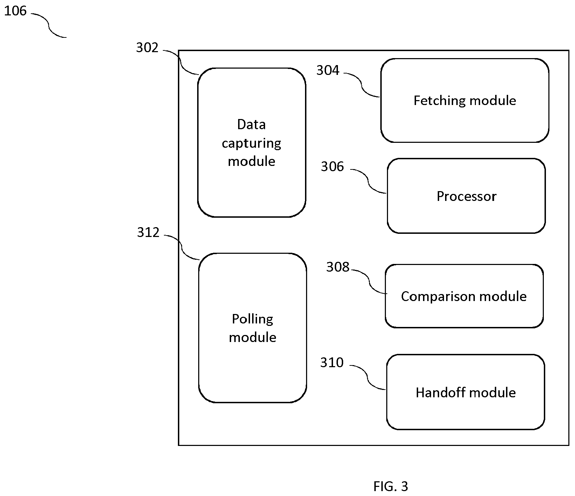

FIG. 3 illustrates various modules of the HCS 106. The various modules may be microcontrollers functioning in tandem with each other to achieve coordinated output from the HCS 106. The HCS 106 includes, a data capturing module 302, a fetching module 304, a processor 306, a comparison module 308, a handoff module 310, and a polling module 312. The processor 306 may be communicably connected to the data capturing module 302, fetching module 304, the comparison module 308, the handoff module 310 and the polling module 312. The processor 306 may further be communicably connected to a display screen (not shown in figure) integrated within the HCS 106 or may be any after-market screen, or vehicle's infotainment screen, or a pair of light bulbs.

In an implementation, the modules such as the data capturing module 302, the fetching module 304, the processor 306, the comparison module 308, the hand-off module 310, and the polling module 312 may include routines, programs, objects, components, data structure and the like, which perform particular tasks or implement particular abstract data types. The modules may further include modules that supplement applications on the processor 306, for example, modules of an operating system. Further, the modules can be implemented in hardware, instructions executed by a processing unit, or by a combination thereof.

The modules may be machine-readable instructions which, when executed by a processor/processing module, perform any of the described functionalities. The machine-readable instructions may be stored on an electronic memory device, hard disk, optical disk or other machine-readable storage medium or non-transitory medium. In an implementation, the machine-readable instructions can also be downloaded to the storage medium via a network connection.

The data capturing module 302 is communicably connected to the processor 306. The data capturing module 302 collects the surrounding environment data and forwards the data to the processor 306. The processor 306 may also be communicably connected to the fetching module 304, the comparison module 308, the handoff module 310, and the polling module 312.

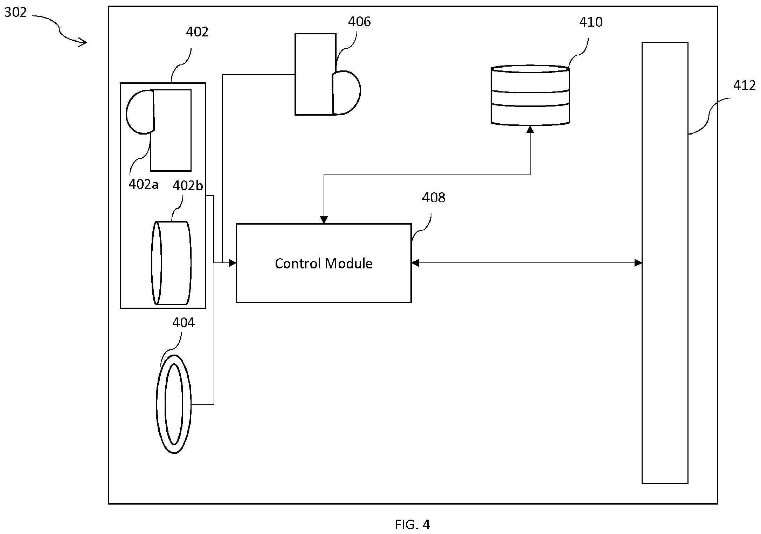

In an example operation, the data capturing module 302 may capture data associated with driver and the environment external to the vehicle 102. The driver data may include identification data as will be described later in detail in conjunction with FIG. 4. The external environment data may include data like objects in front of the vehicle 102, both stationary and mobile. Also, there may be other information like road signs, road conditions, driving pattern and characteristics of driving like rash driving or careful driving, tackling of various situations through different maneuvers etc. This data may be stored within the data capturing module 302 and also forwarded to the central server 204. The external environment data may also be forwarded to the processor 306.

The processor 306 also receives identification attributes of the driver from the driver capturing module 302. The identification attributes data may be utilized identify the driver within the vehicle 102.

The data capturing module 302 may also be configured to collect the location coordinates of the vehicle 102 in real time to detect the location and correlate the surrounding environment data collected. In an embodiment, the location is collected continuously and forwarded to the processor 306.

The processor 306, after receiving the current surrounding environment data and the driver identification data then initiates the fetching module 304. After initiation, the fetching module 304 fetches the autonomous driver profile and the driver's driving profile for the current surrounding environment. As described earlier, the HCS 106 may be connected to other HCS' installed on vehicles around the vehicle 102 within a threshold distance. The threshold distance may be for e.g. 2 KMs. In this manner, the HCS 106 may have information about surrounding environment to up to longer distances. This helps the vehicle 102 to be informed about upcoming surrounding environment.

The fetching module 304, may fetch the driving profiles from the central server 204 and forward the profiles to the comparison module 308. The comparison module compares the autonomous driving profile and the driver's driving profile for the current surrounding environment and the upcoming environment. The comparison module compares the two driving profiles based on different aspects that were overcome while driving in similar situations that may be based upon factors like vehicle efficiency during the drive, timing of various actions taken, etc. based on these driving modes out of the two may be determined.

For example, for a particular surrounding environment, like a crowded segment, the driver's profile may show constant hard braking and acceleration with a decreased vehicle efficiency throughput. Whereas, the autonomous driving profile may provide soft braking maintaining an optimum speed constantly thereby keeping a high vehicle efficiency throughout when compared to driver's driving. Thus, for the surrounding environment, autonomous driving profile is the best driving mode. Therefore, in surrounding environment like crowded environment or dense traffic, city roads, multiple cross-sections, bifurcating roads etc. manual mode may be preferred over autonomous mode. Whereas, in surrounding environment like freeways or roads with very less traffic etc. autonomous drive mode may be preferred over manual mode.

In case when a new driver entry is created, the comparison module 308, very discreetly compares driving pattern of the new driver, captured by the data capturing module 302, and the autonomous driving profile for the vehicle 102. Based on the continued learning of the new driving behavior he comparison module 308 may also forecast the driving style for current surrounding environment conditions that may be upcoming like potholes, traffic condition etc. Based on forecast, the comparison module 308 may perform a comparative study and may make a decision for the determination of driving mode.

The processor 306, receives the comparison results from the comparison module 308. The processor 306 then switches the handoff control through the hand-off module 310. The hand-off module 310 may be connected to multiple actuators placed all over the vehicle 102 that helps in controlling the vehicle 102.

The processor 306 utilizes the polling module 312 to determine favorable driving mode. After receiving the determination of favorable driving mode from the comparison module, the processor may initiate the polling module 312. The polling module 312, initiates a communication with the other HCS' of vehicles within vicinity. After being connected to the other HCS'. The polling module 312 collects data about other vehicles about whether, autonomous driving mode is preferred or not. The polling may be initiated for current environment and time or historically. Further, the polling module 312 may also gather information about driving modes of other vehicles and may determine the decision based on majority. Polling module 312 may also gather information about "how the vehicle 102 is being perceived to be driven?" That is, how well the vehicle 102 is being driven now, based on perception of other vehicles, etc. Such information may be further used to support determination of comparison module 308.

In an embodiment, the information of the vehicle 102 that is in autonomous drive mode may be shared along with a determined information that the autonomous drive mode is more suitable for the particular zone being traversed by the vehicle 102 currently.

Furthermore, the processor 306, in addition may gather vehicle data to further support driving mode determination. The HCS 106 may be connected to an Electronic Control Unit (ECU) installed within the vehicle. The ECU stores performance data of the vehicle 102 and its state. Vehicle state may include status of its various parts like tires, brakes, clutch plates, etc. and their usage patterns. The HCS 106 may utilize the current vehicle performance or vehicle state to support driving mode determination from the comparison module 308. For example, in case the vehicle 102 has worn out tires and autonomous drive profile involves standard braking pressure that may be higher for the given conditions, whereas the driver has softer braking pattern, the drive control is shifted under driver's control.

In yet another implementation, the HCS 106 may also obtain successful drive mode changes from vehicles that are connected to the immediate neighboring vehicles of the vehicle 102. These vehicles may have just crossed a threshold distance after a successful drive mode change without reverting to original drive mode. Therefore, in case 7 out of 10 vehicles changed from autonomous to manual drive mode and were successful without much correction profiles, then change of drive mode for vehicle 102 may be made in case drive mode change is being requested. However, in a situation, the drive mode was a failure, then no such change is done. For example, if the vehicle 102 wants to change from manual to autonomous however, the autonomous profile was not successful, then this may be taken into account to take a decision of drive mode change. Correction profile, may include information like how many times, correction was provided to vehicle driving mode. Hence, too many corrections may not be favorable for the current driving mode and vice versa. The correction profile information may also be utilized to take a decision on the driving mode change request received.

In yet another embodiment, HCS 106 may also share the information of change in drive mode with a third-party server. This information may be utilized by the third-party server to store the drive mode change and utilize the same. Further, the information may also be sent to insurance companies to compute insurance premiums during renewal of vehicle insurances. For example, insurance premiums may be lower than usual ones for vehicles using more safety-oriented drive mode changes than the ones rejecting the drive mode change decisions. Further, the information may also be shared with car servicing providers to forecast the required servicing due on next servicing, based on the driving mode changes acceptance and rejection decisions. Furthermore, the information may also be utilized to place a price on the vehicle 102, if being set up for selling. Furthermore, this information may also be shared continuously with the law enforcement and medical agencies to be on an alert due to a shift in driving mode of the vehicle 102.

In yet another embodiment, when there is a change in the drive mode of the vehicle 102, there may be a communication sent by the HCS 106 to connected neighboring HCS' of those vehicles that are already being driven in autonomous mode. This may help the vehicles to coordinate with each other and make aware each other of upcoming events. Also, it helps to make driving of the vehicles being driven autonomously in a coordinated manner.

In yet another embodiment, the HCS 106 may communicate with monitoring devices present on road, to make them aware of the change in driving mode. This may help to take a feedback in case the driving mode is not performing good. There may be a continuous sharing possible and feedback may either be provided in real-time or may be stored in the central server 204 to be utilized for future decisions on driving mode changes.

In yet another embodiment, while the vehicle 102 is in autonomous drive mode, the data capturing module 302 may continuously monitor the driver. This is done to check in case the driver is relaxing or not paying attention on the road as the vehicle 102 may be required to switch back to manual drive mode for an upcoming surrounding like narrow roads, high traffic etc. If the driver is not paying attention an alert may be generated to attract attention of the driver.

In yet another implementation, if the capturing module 302 determines the driver to be sleeping while the vehicle 102 is in autonomous drive mode, and the vehicle 102 is about to enter an environment with preferred mode as manual drive mode. In such a situation, the vehicle 102 may be brought to a complete halt and the driver may be woken up by using an increased level of warning.

FIG. 4 illustrates various modules of the data capturing module 302, in accordance with an implementation of the present subject matter. The data capturing module 302 includes an exterior monitoring module 402, a driver monitoring module 406, a ranging module 404, a control module 408, a memory 410, and a data sharing module 412. The control module 408 may be communicably connected to the exterior monitoring module 402, the driver monitoring module 406, and the ranging module 404. The control module 408 may also be communicably connected to the memory 410, and the data sharing module 412.

In an embodiment, the exterior monitoring module 402 may include a stereo camera 402A and a long range narrow field camera 402B. The stereo camera 402A may be a dual lens camera having a short range. This helps the stereo camera 402A to capture data within a short distance of the vehicle 102. The stereo camera 402A captures the nearby objects, events and data. Further, the long range narrow field camera 402B is configured to capture events at a farther distance and hence captures objects, events and data at a longer distance from the vehicle 102.

The driver monitoring module 406 is positioned to face the driver of the vehicle 102 and monitors presence of the driver. The driver monitoring module may also monitor driver state of the driver. The driver's presence may be determined using techniques like motion detection, occupancy sensing, thermal vision etc. The driver monitoring module 406, extracts attributes of the driver, once it is ascertained that the driver is present within the vehicle 102. Attributes extracted may include, but, not limited to facial scan, retinal scan, thermal signatures, fingerprint scan etc. In another example, the user's picture may be taken by the driver monitoring module 406. In yet another example, the driver's driving behavior may be used as an attribute. The attribute may be determined by the exterior monitoring module 402. The extracted attributes may be then compared with a database of drivers stored within a memory 410. On a successful match, the driver identity is then shared with the control module 408 for further processing through the data sharing module 412. In another implementation, the extracted attributed may be then compared with a database of drivers stores within the central server 204. On a successful match, the driver identity is then shared with the processor 408 for further processing.

Also, the driver monitoring module 406 may also determine the driver state by utilizing driver's eye gaze, facial expressions and head movement. Various driver states that may be determined by the driver monitoring module 406 are fatigue, sleepiness, anger, happy, jolly, sad, neutral, etc. Hence the driver monitoring module 406 is capable of determining multiple driver states. In another implementation of the present subject matter, the driver monitoring module 406 may be a charged coupled device camera, or a Complementary Metal Oxide Semiconductor (CMOS) camera.

In yet another embodiment, the ranging module 404, used for determining distance to objects may be one of a light detection and ranging (LiDAR) unit, a radio detection and ranging (RADAR), a sonic detection and ranging (SODAR), and a sound navigation and ranging (SONAR).

The control module 408, amongst other capabilities, may be configured to fetch and execute computer-readable instructions stored in a memory. The control module 408 may be implemented as one or more microprocessors, microcomputers, microcontrollers, digital signal processors, central processing units, state machines, logic circuitries, and/or any devices that manipulate signals based on operational instructions. The functions of the various elements shown in the figure, including any functional blocks labelled as "processor(s)", may be provided through the use of dedicated hardware as well as hardware capable of executing software in association with appropriate software.

The control module 408 and other modules like the exterior monitoring module 402, the driver monitoring module 406, and the ranging module 404 as described above may be implemented as hardware or software. If such modules are implemented in software, one or more processors of the associated computing system that performs the operation of the module direct the operation of the computing system in response to having executed computer-executable instructions. For example, such computer-executable instructions may be embodied on one or more computer-readable media that form a computer program product. In another implementation, the control module 408 may also be connected to Global Positioning System (GPS), indicator of the vehicle 102 or pre-fed path of the route to be covered by the vehicle 102.

In yet another embodiment, the memory 410 may be utilized to store the collected external environment and internal environment data collected. The memory 410 may also be in communication with the central server 204 for exchange of information in a two-way manner. The memory 410 may be without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

In another embodiment, the data sharing module 412 may be a radio transmitter chip placed to provide data ingress and egress.

In another embodiment, there may be a warning module (not shown in the figure), configured to provide a warning to the driver, which may be one of an Light Emitting Diode (LED), a Liquid Crystal Display (LCD) or a speaker.

In operation, the exterior monitoring module 402 may continuously record the surrounding environment of the vehicle 102. In one example instant, the surrounding environment may include a crowded or an empty road.

In another example, the exterior monitoring module 402 may also detect the lanes or boundaries of a road or path travelled by the vehicle 102.

The exterior monitoring module 402 may capture the driving pattern of the driver based on the area of the road 104 covered by the vehicle 102 during travel. This driving pattern may also be used as an attribute to identify the driver. The driving pattern attribute may be compared with stored driving pattern of plurality of drivers in the central server 204.

It would also be noted that the driving pattern is indicative of the manner in which the vehicle 102 is being driven on the road 104. Hence, the driving pattern may also be utilized to evaluate driver profile that also indicates how a driver drives through various situations. This data may be stored in the memory 410 or may be stored within the central server 204.

For detecting presence of a driver, attributes may be extracted in multiple ways and may be used to collect redundant information to ascertain correct determination of the driver. The attribute may be extracted by the driver monitoring module 406. The driver monitoring module 406 extracts the retinal, facial, or voice scans. Other attribute may be extracted by prompting the user to place his fingers on the data capturing module 302, to obtain finger scan. In another implementation, the driver monitoring module 406 may also be connected to a user device through which the driver may be identified based on unique identity document (ID) of the user device. The user device may be a smartphone, smartwatch, etc. and unique ID may be International Mobile Equipment Identity (IMEI) ID of the smartphone or media access control (MAC) address of the user device. The exterior monitoring module 402 may also capture driver's identification attribute by monitoring the driving pattern of the driver. All the attributes once extracted may be compared with the database of attributes corresponding to multiple drivers that may have driven the vehicle 102. If there is a successful match, then the driver is marked as recognized driver. In case there is no match, the driver is marked as a new driver.

In addition to the above, the driver monitoring module 406 may also record facial expressions of the driver for eye gaze, blink rate of eyelids, change in skin tone, nostrils, jaw movements, frowning, baring teeth, movement of cheeks, movement of lips and head movements when the driver is driving the vehicle on the road 104. The continuous recording of the driver state is fed to the control module 408.

The above description does not provide specific details of manufacture or design of the various components. Those of skill in the art are familiar with such details, and unless departures from those techniques are set out, techniques, known, related art or later developed designs and materials should be employed. Those in the art are capable of choosing suitable manufacturing and design details.

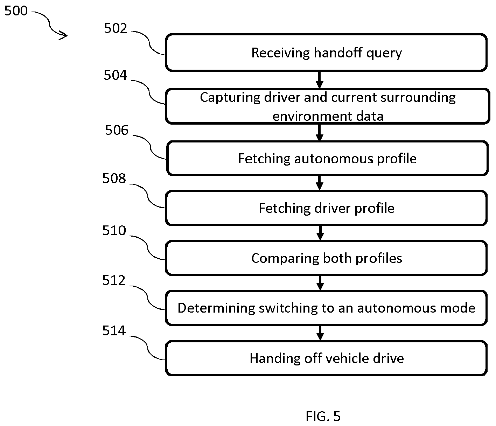

FIG. 5, illustrates a method 500 for performing handoff of the vehicle 102, in accordance to an embodiment. The order in which the method is described is not intended to be construed as a limitation. Furthermore, the method can be implemented in any suitable hardware, software, firmware, or combination thereof. However, for ease of explanation, in the embodiments described below, the method may be considered to be implemented in the above described system and/or the apparatus and/or any electronic device (not shown).

At step 502, the handoff query is received by the HCS 106. The query may be manually raised by the driver or may be raised automatically. The automatic query initiation may be based upon environment or location parameters being continuously diagnosed.

At step 504, surrounding environment data is captured. The surrounding information may also be supplemented with location information. Location information may be utilized to correlate the surrounding information. The location information may be gathered using a Global Positioning System (GPS) within the data capturing module 302. Also, collected are driver identification attributes. The driver attributes may be biometric scan like retinal scan, voice scan, finger print scan or even driving pattern scans as has been described earlier in the description. The driver monitoring camera 406 may take biometric scan of the face and retina of the driver for extracting attributes. Also, there may be a prompt on the display of the vehicle 102 to place finger on a designated area of the HCS 106 for finger scanning. For finger scanning, the HCS 106 may be supplied with adequate finger print sensing hardware like fingerprint sensors etc.

At step 506, autonomous profile for the vehicle 102 is fetched. The autonomous profile is indicative of driving pattern of the vehicle 102 under autonomous mode. The autonomous profile may be stored in the central server 204 or within the memory 410 of the HCS 106. Further at step 508, driving profile of the driver is also fetched from the central server 204. At step 510, the autonomous profile and the driver's profile are compared with each other to identify best fit driving mode.

At step 512, after comparison, it is determined whether switching to the autonomous driving mode is favorable or not. If not, the handoff is not effectuated. However, if the autonomous mode is favored for the current surrounding environment, then at step 514, the handoff of the vehicle 102 is switched to autonomous.

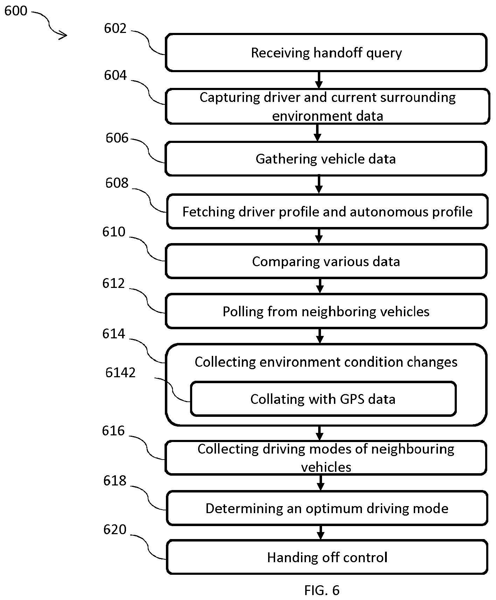

FIG. 6 illustrates a method 600, for handoff control the vehicle 102, in accordance with another embodiment of the subject-matter. The order in which the method is described is not intended to be construed as a limitation. Furthermore, the method can be implemented in any suitable hardware, software, firmware, or combination thereof. However, for ease of explanation, in the embodiments described below, the method may be considered to be implemented in the above described system and/or the apparatus and/or any electronic device (not shown).

At step 602, handoff query, whether manually raised or automatically generated is received. driver presence is identified within the vehicle. The driver presence may be detected using various known techniques like motion sensing, presence sensing, thermal imaging etc. At step 604, driver presence is identified within the vehicle. The driver presence may be detected using various known techniques like motion sensing, presence sensing, thermal imaging etc. Once the presence of the driver is identified, the driver monitoring module 406, scans for biometric data of the driver and extracts various attributes of the driver. The various attributes that may be extracted for identification have been enlisted in the description earlier.

Further, the attributes are cross verified with the set of attributes stored in the memory 410 or within the central server 204 to ascertain driver identity. Also, the HCS 106 collects current environment data through the data capturing module 302.

Further, at step 606, the HCS also gathers vehicle state data from the ECU of the vehicle. This may provide information about the vehicle and its performance state. At step 608, autonomous profile and driver's profile is fetched from the central server 204 or from memory 410.

At step 610, the autonomous profile and the driver profile indicating driving patterns under driver's control and autonomous modes are compared. The comparison is made for the current surrounding environment data. Also, this comparison may be made for supplemented vehicle state data gathered from ECU of the vehicle 102. Further, at step 612 polling from neighboring vehicles may also be carried out. Polling may further help in determining the driving mode for the current surrounding environment and vehicle state and also based on polling data. Polling data may include information about perception of current driving mode from neighboring vehicles' viewpoint that is whether according to nearby vehicles a switch of control is favored or not. For example, in case the driver is driving rashly, the nearby vehicles may poll in to favor switching of the handoff control. However, in case in a crowded place an autonomous drive mode may be too cautious and may brake frequently hence, may be polled to switch from autonomous mode.

Further, at step 614, the nearby vehicles are also queried for change in environmental conditions. The nearby vehicles query other vehicles and so on and so forth. This may be done for a certain predetermined threshold distance like 5-10 KMs. In another implementation, the frequency of change of environmental data may also be gathered for a threshold distance. This step may further include a sub-step 6142, wherein the environment data collected from nearby vehicles is further collated and correlated with GPS data.

A step 616, driving modes of the neighboring vehicles may be collected for ascertaining more redundancy to choosing between autonomous driving and driver's control. At step 618, optimum driving mode from the autonomous profile and the driver's profile based on the factors discussed above. At step 620, the control of the vehicle 102 is handed off to the determined favorable driving mode.

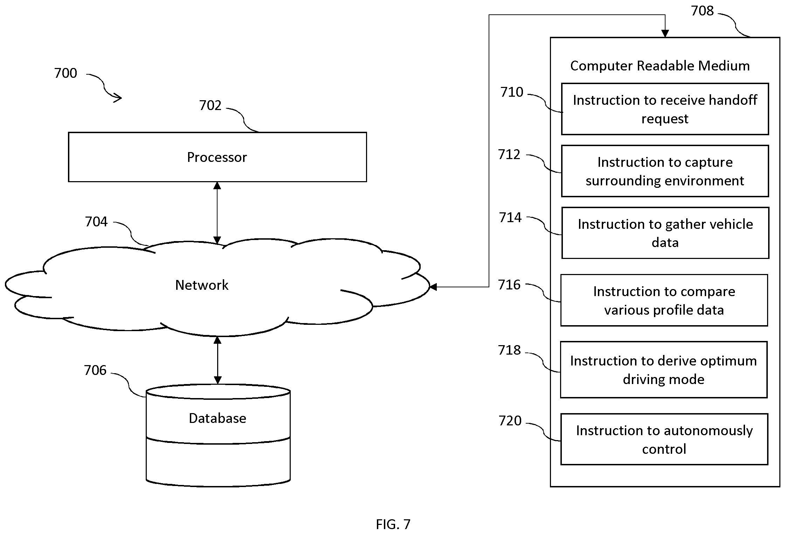

Referring now to FIG. 7 illustrates an exemplary computer system 700 for implementing various embodiments is disclosed. The computer system 700 may comprise a central processing unit ("CPU" or "processor") 702. The processing unit 702 may comprise at least one data processor for executing program components for executing user- or system-generated requests. The processing unit 702 may include specialized processing units such as integrated system (bus) controllers, memory management control units, floating point units, graphics processing units, digital signal processing units, etc. The processing unit 702 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

In some embodiments, the processing unit 702 may be disposed in communication with a network 704 via a network interface (not shown in figure). The network interface may communicate with the network 704. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The network 704 may include, without limitation, a direct interconnection, local area network (LAN), wide area network (WAN), wireless network (e.g., using Wireless Application Protocol) etc.

In some embodiments, the processing unit 702 may be disposed in communication with one or more databases 706 (e.g., a RAM, a ROM, etc.) via the network 704. The network 704 may connect to the database 706 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc. The database may include database from the exterior monitoring module 402, the ranging module 404 and the driver monitoring module 406.

The processing unit 702 may also be disposed in communication with a computer readable medium 708 (e.g. a compact disk, a universal serial bus (USB) drive, etc.) via the network 704. The network 704 may connect the computer readable medium 708 including without limitation, floppy disks, flexible disks, hard disks, magnetic tape, or any other magnetic storage medium, compact disc read-only memory (CD-ROM), digital versatile disc (DVD), or any other optical medium, a random access memory (RAM), a programmable read-only memory (PROM), an erasable programmable read-only memory (EPROM), a FLASH-EPROM, or other memory chip or cartridge, or any other tangible medium. The computer readable medium 708 may be processed by the computer system 700 or in any other computer system. The computer readable medium 708 may include instructions like instruction to monitor driver state, instruction to monitor external environment, instruction to detect events, instruction to generate warnings, or instructions to vary warning intensity.

It will be appreciated that, for clarity purposes, the above description has described embodiments with reference to different functional units and processors. However, it will be apparent that any suitable distribution of functionality between different functional units, processors or domains may be used without detracting from the present subject matter.

The methods illustrated throughout the specification, may be implemented in a computer program product that may be executed on a computer. The computer program product may comprise a non-transitory computer-readable recording medium on which a control program is recorded, such as a disk, hard drive, or the like. Common forms of non-transitory computer-readable media include, for example, floppy disks, flexible disks, hard disks, magnetic tape, or any other magnetic storage medium, CD-ROM, DVD, or any other optical medium, a RAM, a PROM, an EPROM, a FLASH-EPROM, or other memory chip or cartridge, or any other tangible medium from which a computer can read and use.

Alternatively, the method may be implemented in transitory media, such as a transmittable carrier wave in which the control program is embodied as a data signal using transmission media, such as acoustic or light waves, such as those generated during radio wave and infrared data communications, and the like.

Alternatively, the method may be implemented using a combination of a processing unit 702, a non-transitory Computer Readable Medium (CRM) 708, Database 706 all connected to a network 704. The computer readable medium may include instructions that may be fetched by the processing unit 702. The instructions may include instruction to determine receive handoff request 710, instruction to capture surrounding environment 712, instruction to gather vehicle data 714, instruction to compare various profile data 716, instruction to optimum driving mode 718, and instruction to decide vehicle control shift 720.

In one example, the processing unit 702 may execute the instruction to receive handoff query 710 to change control of vehicle driving mode. The handoff query may either be generated by the driver or may be automatically requested. Further, the processing unit 702 may also execute the instruction to extract capture surrounding environment 712.

In an example implementation, the processing unit 702 may execute the instruction to gather vehicle data 714 from ECU of the vehicle 102. After this the driver, the processing unit 702 may execute the instruction to compare autonomous profile and driver profile 716. Further to this, the processing unit executes the instruction to determine optimum driving mode 718 for the current surrounding environment conditions.

Thereafter, the processing unit 702 executes the instruction to autonomously control the vehicle 720 in case autonomous mode is determined to be the optimum mode in surrounding environment.

Various presently unforeseen or unanticipated alternatives, modifications, variations, or improvements therein may subsequently be made by those skilled in the art without departing from the scope of the present invention as encompassed by the following claims.

## Claims

1. A method for managing drive modes of a vehicle (102) comprising:
detecting driver of the vehicle (102) based on at least one attribute of the driver;
capturing surrounding environment conditions using a plurality of data capturing modules;
fetching autonomous profile and a driver profile of a driver driving the vehicle (102) based on the surrounding environment conditions, wherein
the autonomous profile is indicative of driving performance of the vehicle under autonomous mode and the driver profile is indicative of driving
pattern of the driver of the vehicle (102);
determining switching to an autonomous mode of driving based on comparing the autonomous profile with the driver profile based on the surrounding environment conditions; and on polling, from neighboring vehicles, preferred driving mode as per driving mode status of the neighboring vehicles.

2. The method of claim 1, wherein the plurality of data capturing modules is any one or a combination of cameras, radio detection and ranging (RADARs), light detection and ranging (LiDARs), or ultrasonic sensors.

3. The method of claim 1 further comprising collecting data from neighboring vehicles about continuation of current surrounding environment.

4. The method of claim 3 further comprising collating Global Positioning System (GPS) data with data collected from neighboring vehicles about current surrounding environment.

5. The method of claim 1 further comprising collecting driving mode of neighboring vehicles wherein the driving mode is manual or autonomous mode.

6. The method of claim 5 further comprising collecting correction profile for each of
the neighboring vehicles upto a threshold distance, wherein the correction profile includes information on how many times the driving mode was reverted to the original driving mode after a change of driving mode.

7. A handoff control system (106) for a vehicle (102) comprising;
a processor (306);
a data capturing module (302) , coupled to the processor (306), configured to collect data of surrounding environment;
a fetching module (304) to fetch autonomous profile and a driver profile of a driver driving the vehicle (102) based on the surrounding environment conditions, wherein the autonomous profile is indicative of driving performance of the vehicle (102) under autonomous mode and the driver profile is indicative of driving pattern of the driver of the vehicle (102);
a comparison module (308) to compare the autonomous profile with the driver profile based on the surrounding environment conditions;
a polling module (312) to poll from neighboring vehicles, preferred driving mode as per driving mode status of the neighboring vehicles; and
a handoff module (310), coupled to multiple actuators to initiate switching to an autonomous mode based on the comparison results from the comparison module (308) and on the information gathered by the polling module (312).

8. The system (106) of claim 7, wherein the data capturing module (302) is any one or a combination of cameras, RADARs, LiDARs, or ultrasonic sensors.

9. The system (106) of claim 8, wherein the handoff control system (106) is further connected to a central server (204).

10. The system (106) of claim 9, wherein the central server (204) is further connected to a plurality of similar handoff control systems (106A-106D).

11. The system (106) of claim 10, wherein the central server (204) stores data from all the systems for further usage about handoff decision.

12. The system (106) of claim 11, further includes a warning module to provide warnings to the driver.

13. The system (106) of claim 12, wherein the warning module may be Light Emitting Diode (LED) module, a Liquid Crystal Display (LCD), or a speaker.

14. The system (106) of claim 11, wherein the handoff module (310) decides real time whether the switching to an autonomous mode is initiated.

15. The system (106) of claim 7, wherein the processor (306) is connected to an Electronic Control Unit (ECU) to gather vehicle data.

## Patentansprüche

1. Verfahren zum Verwalten von Fahrmodi eines Fahrzeugs (102), das Folgendes umfasst:
Erfassen des Fahrers des Fahrzeugs (102) basierend auf mindestens einem Attribut des Fahrers;
Aufzeichnen von Umgebungsbedingungen unter Verwendung einer Vielzahl von Datenaufzeichnungsmodulen;
Abrufen eines autonomen Profils und eines Fahrerprofils eines Fahrers, der das Fahrzeug (102) fährt, basierend auf den Umgebungsbedingungen, wobei das autonome Profil die Fahrleistung des Fahrzeugs in dem autonomen Modus angibt, und das Fahrerprofil das Fahrmuster des Fahrers des Fahrzeugs (102) angibt;
Bestimmen des Umschaltens in einen autonomen Fahrmodus basierend auf
Vergleichen des autonomen Profils mit dem Fahrerprofil basierend auf den Umgebungsbedingungen; und
bei Abfrage von Nachbarfahrzeugen, bevorzugter Fahrmodus gemäß Fahrmodusstatus der Nachbarfahrzeuge.

2. Verfahren nach Anspruch 1, wobei die Vielzahl von Datenaufzeichnungsmodulen eines oder eine Kombination von Kameras, funkgestützter Ortung und Abstandsmessung (RADARs), lichtgestützte Ortung und Abstandsmessung (LiDARs) oder Ultraschallsensoren ist.

3. Verfahren nach Anspruch 1, das ferner das Sammeln von Daten von benachbarten Fahrzeugen über die Fortsetzung der aktuellen Umgebung umfasst.

4. Verfahren nach Anspruch 3, das ferner das Vergleichen von Daten des Global Positioning System (GPS) mit Daten, die von benachbarten Fahrzeugen über die aktuelle Umgebung gesammelt werden, umfasst.

5. Verfahren nach Anspruch 1, das ferner das Sammeln des Fahrmodus benachbarter Fahrzeuge umfasst, wobei der Fahrmodus ein manueller oder autonomer Modus ist.

6. Verfahren nach Anspruch 5, das ferner das Sammeln eines Korrekturprofils für jedes der benachbarten Fahrzeuge bis zu einer Schwellenentfernung umfasst, wobei das Korrekturprofil Informationen darüber beinhaltet, wie oft der Fahrmodus nach einer Änderung des Fahrmodus in den ursprünglichen Fahrmodus zurückversetzt wurde.

7. Übergabesteuersystem (106) für ein Fahrzeug (102), das Folgendes umfasst;
einen Prozessor (306);
ein Datenaufzeichnungsmodul (302), das mit dem Prozessor (306) gekoppelt ist und dazu konfiguriert ist, Daten der Umgebung zu sammeln;
ein Abrufmodul (304), um ein autonomes Profil und ein Fahrerprofil eines Fahrers, der das Fahrzeug (102) fährt, basierend auf den Umgebungsbedingungen abzurufen, wobei das autonome Profil die Fahrleistung des Fahrzeugs (102) in den autonomen Modus angibt, und das Fahrerprofil das Fahrmuster des Fahrers des Fahrzeugs (102) angibt;
ein Vergleichsmodul (308) zum Vergleichen des autonomen Profils mit dem Fahrerprofil basierend auf den Umgebungsbedingungen;
ein Abfragemodul (312), um von den benachbarten Fahrzeugen einen bevorzugten Fahrmodus gemäß dem Fahrmodusstatus der Nachbarfahrzeuge abzufragen; und
ein Übergabemodul (310), das mit mehreren Aktuatoren gekoppelt ist, um das Umschalten in einen autonomen Modus basierend auf den Vergleichsergebnissen von dem Vergleichsmodul (308) und auf den Informationen, die von dem Abfragemodul (312) gesammelt werden, zu initiieren.

8. System (106) nach Anspruch 7, wobei das Datenaufzeichnungsmodul (302) eines oder eine Kombination von Kameras, RADARs, LiDARs oder Ultraschallsensoren ist.

9. System (106) nach Anspruch 8, wobei das Übergabesteuersystem (106) ferner mit einem zentralen Server (204) verbunden ist.

10. System (106) nach Anspruch 9, wobei der zentrale Server (204) ferner mit einer Vielzahl ähnlicher Übergabesteuersysteme (106A-106D) verbunden ist.

11. System (106) nach Anspruch 10, wobei der zentrale Server (204) Daten von allen Systemen zur weiteren Nutzung über die Übergabeentscheidung speichert.

12. Das System (106) nach Anspruch 11, das ferner ein Warnmodul umfasst, um dem Fahrer Warnungen bereitzustellen.

13. System (106) nach Anspruch 12, wobei das Warnmodul ein Leuchtdiodenmodul (LED-Modul), eine Flüssigkristallanzeige (LCD) oder ein Lautsprecher sein kann.

14. System (106) nach Anspruch 11, wobei das Übergabemodul (310) in Echtzeit entscheidet, ob das Umschalten in einen autonomen Modus initiiert wird.

15. System (106) nach Anspruch 7, wobei der Prozessor (306) mit einer elektronischen Steuereinheit (ECU) verbunden ist, um Fahrzeugdaten zu sammeln.

## Revendications

1. Procédé pour la gestion de modes de conduite d'un véhicule (102) comprenant :
la détection d'un conducteur du véhicule (102) en fonction d'au moins un attribut du conducteur ;
la saisie de conditions d'environnement alentour en utilisant une pluralité de modules de saisie de données ;
la récupération d'un profil autonome et d'un profil de conducteur d'un conducteur conduisant le véhicule (102) en fonction des conditions d'environnement alentour, dans lequel le profil autonome est indicatif des performances de conduite du véhicule en mode autonome et le profil de conducteur est indicatif du modèle de conduite du conducteur du véhicule (102) ;
la détermination du passage à un mode de conduite autonome en fonction de
la comparaison du profil autonome avec le profil de conducteur en fonction des conditions d'environnement alentour ; et
sur l'interrogation, en provenance de véhicules voisins, d'un mode de conduite préféré selon l'état de mode de conduite des véhicules voisins.

2. Procédé selon la revendication 1, dans lequel la pluralité de modules de saisie de données est l'une quelconque ou une combinaison de caméras, de détection et télémétrie par radioélectricité (RADAR), de détection et télémétrie par ondes lumineuses (LiDAR), ou de capteurs à ultrasons.

3. Procédé selon la revendication 1 comprenant en outre la collecte de données provenant de véhicules voisins concernant la continuité d'un environnement alentour actuel.

4. Procédé selon la revendication 3 comprenant en outre le rassemblement de données du système mondial de localisation (GPS) avec des données collectées en provenance de véhicules voisins concernant un environnement alentour actuel.

5. Procédé selon la revendication 1 comprenant en outre la collecte d'un mode de conduite de véhicules voisins dans lequel le mode de conduite est un mode manuel ou autonome.

6. Procédé selon la revendication 5 comprenant en outre la collecte d'un profil de correction pour chacun des véhicules voisins jusqu'à une distance seuil, dans lequel le profil de correction inclut des informations sur le nombre de fois où le mode de conduite est revenu au mode de conduite d'origine après un changement de mode de conduite.

7. Système de contrôle de transfert (106) pour un véhicule (102) comprenant ;
un processeur (306) ;
un module de saisie de données (302), couplé au processeur (306), configuré pour collecter des données d'un environnement alentour ;
un module de récupération (304) pour récupérer un profil autonome et un profil de conducteur d'un conducteur conduisant le véhicule (102) en fonction des conditions d'environnement alentour, dans lequel le profil autonome est indicatif de performances de conduite du véhicule (102) en mode autonome et le profil de conducteur est indicatif d'un modèle de conduite du conducteur du véhicule (102) ;
un module de comparaison (308) pour comparer le profil autonome avec le profil de conducteur en fonction des conditions d'environnement alentour ;
un module d'interrogation (312) pour interroger en provenance de véhicules voisins, un mode de conduite préféré selon un état de mode de conduite des véhicules voisins ; et
un module de transfert (310), couplé à de multiples actionneurs pour initier le passage à un mode autonome en fonction des résultats de comparaison provenant du module de comparaison (308) et des informations recueillies par le module d'interrogation (312).

8. Système (106) selon la revendication 7, dans lequel le module de saisie de données (302) est l'une quelconque ou une combinaison de caméras, de RADAR, de LiDAR, ou de capteurs à ultrasons.

9. Système (106) selon la revendication 8, dans lequel le système de contrôle de transfert (106) est en outre connecté à un serveur central (204).

10. Système (106) selon la revendication 9, dans lequel le serveur central (204) est en outre connecté à une pluralité de systèmes de contrôle de transfert similaires (106A-106D).

11. Système (106) selon la revendication 10, dans lequel le serveur central (204) stocke les données provenant de tous les systèmes pour une utilisation ultérieure concernant une décision de transfert.

12. Système (106) selon la revendication 11, inclut en outre un module d'avertissement pour fournir des avertissements au conducteur.

13. Système (106) selon la revendication 12, dans lequel le module d'avertissement peut être un module à diode électroluminescente (DEL), un écran à cristaux liquides (LCD), ou un haut-parleur.

14. Système (106) selon la revendication 11, dans lequel le module de transfert (310) décide en temps réel si le passage à un mode autonome est initié.

15. Système (106) selon la revendication 7, dans lequel le processeur (306) est connecté à une unité de contrôle électronique (ECU) pour recueillir des données de véhicule.
